# EUROPEAN PATENT APPLICATION

(11) **EP 4 207 426 A1**
(43) Date of publication of application: **05.07.2023**
(21) Application number: 20964762.7
(22) Date of filing: 11.12.2020
(51) Int. Cl.: H01M 10/058

(54) **ELECTROCHEMICAL DEVICE AND ELECTRONIC APPARATUS**

(71) Applicant: Dongguan Amperex Technology Limited, Dongguan, Guangdong 523808 (CN)
(72) Inventor: JIANG, Bing, Dongguan, Guangdong 523808 (CN); HUANG, Xuqi, Dongguan, Guangdong 523808 (CN); ZHOU, Feng, Dongguan, Guangdong 523808 (CN); LIU, Tao, Dongguan, Guangdong 523808 (CN)
(74) Representative: Klunker IP Patentanwälte PartG mbB
(86) International application number: PCT/CN2020/135869
(87) International publication number: WO 2022/120826

(57) **Abstract**

An electrochemical apparatus includes a negative electrode, where the negative electrode includes a current collector, a first coating, and a second coating. The second coating is provided on at least one surface of the current collector. The first coating is provided between the current collector and the second coating, and the first coating includes inorganic particles. A peeling force F between the first coating and the second coating satisfies 15 N≤F≤30 N. According to the electrochemical apparatus, the first coating is provided between the current collector and the second coating of the negative electrode, and the first coating contains the inorganic particles, effectively enhancing adhesion between the current collector and the second coating, reducing the binder amount in the second coating, and increasing the proportion of a negative electrode active material in the negative electrode, thereby increasing the energy density of lithium-ion batteries.

## Description

### TECHNICAL FIELD

This application relates to the field of electrochemical technologies, and specifically, to an electrochemical apparatus and an electronic apparatus.

### BACKGROUND

During manufacturing and use of lithium-ion batteries, negative electrode active materials are easy to fall off from the surfaces of electrode. For example, decarbonization easily occurs after cold pressing, leading to capacity drop of the batteries. During use of a battery, its negative electrode material may fall off from the surface of the electrode plate due to volume changes of the negative electrode materials, resulting in potential safety hazards.

In the prior art, it is typical to apply a conductive layer on the surface of a current collector to alleviate decarbonization of an electrode plate. However, existing conductive layers are usually thick, leading to loss of the energy density. In addition, in the existing conductive layers, the number of effective adhesion sites between a negative electrode of graphite and the conductive layer is limited, leading to decarbonization after long-term cycling of the battery. Therefore, it is urgent to find a new method for improving the viscosity of the electrode plate and reducing falling off of the negative electrode active material.

### SUMMARY

This application is intended to provide an electrochemical apparatus to enhance adhesion between a negative electrode plate and a negative electrode active material in the negative electrode plate by providing an appropriate coating between an active material layer and a current collector in a negative electrode of the electrochemical apparatus.

A first aspect of this application provides an electrochemical apparatus including a negative electrode, where the negative electrode includes a current collector, a first coating, and a second coating. The second coating is provided on at least one surface of the current collector. The first coating is provided between the current collector and the second coating, and the first coating includes inorganic particles. A peeling force F between the first coating and the second coating satisfies 15 N≤F≤30 N.

In some embodiments of the first aspect of this application, a Dᵥ50 particle size of the inorganic particles satisfies 50 nm≤Dᵥ50≤1 µm.

In some embodiments of the first aspect of this application, a Mohs hardness of the inorganic particles is 2.5 to 7.5.

In some embodiments of the first aspect of this application, the inorganic particles include at least one of boehmite, aluminum powder, quartz sand, apatite, nanoceramics, or zircon.

In some embodiments of the first aspect of this application, the first coating further includes a conductive agent, a binder, and a dispersant, and based on a total mass of the first coating, a mass ratio of the inorganic particles, the binder, the conductive agent, and the dispersant is (2%-10%):(30%-60%):(30%-60%):(2%-5%).

In some embodiments of the first aspect of this application, the binder includes at least one of styrene-butadiene rubber, polyacrylic acid, polyvinyl alcohol, polyethylene glycol, polyacrylic ester, polyacrylonitrile, polyvinylidene fluoride, polyvinyl chloride, formaldehyde resin, cyclodextrin, or cyanoacrylate.

In some embodiments of the first aspect of this application, the dispersant includes at least one of sodium hydroxymethyl cellulose, lithium hydroxymethyl cellulose, sodium alginate, propylene glycol alginate, methyl cellulose, starch sodium phosphate, sodium carboxymethyl cellulose, sodium alginate protein, casein, sodium polyacrylate, polyoxyethylene, or polyvinylpyrrolidone.

In some embodiments of the first aspect of this application, the conductive agent includes at least one of a zero-dimensional conductive agent or a one-dimensional conductive agent.

In some embodiments of the first aspect of this application, at least one of the following characteristics is satisfied:
the zero-dimensional conductive agent including at least one of conductive carbon black, acetylene black, or Ketjen black, and Dᵥ50 of the zero-dimensional conductive agent being 50 nm to 1 µm; or
the one-dimensional conductive agent including at least one of a conductive carbon tube or a conductive carbon rod, and an average diameter of the one-dimensional conductive agent being 50 nm to 1 µm.

In some embodiments of the first aspect of this application, thickness L of the first coating satisfies 100 nm≤L≤2 µm.

In some embodiments of the first aspect of this application, coating weight X of the first coating satisfies: 0.02 mg/cm²≤X≤0.15 mg/cm².

In some embodiments of the first aspect of this application, a cover rate of the first coating is 50% to 100%.

In some embodiments of the first aspect of this application, the peeling force between the first coating and the current collector is 10 N/m to 300 N/m.

In some embodiments of the first aspect of this application, resistance of the negative electrode is 1 mQ to 100 mΩ.

A second aspect of this application provides an electronic apparatus including the electrochemical apparatus according to the first aspect of this application.

According to the electrochemical apparatus in this application, the first coating is provided between the current collector and the second coating of the negative electrode. The first coating contains inorganic particles. The inorganic particles are wrapped with a binder to form an adhesion unit with higher strength. The formation of the adhesion unit enhances adhesion strength and increases adhesion sites of the first coating, thereby effectively enhancing adhesion between the current collector and the second coating. In addition, the adhesion unit with higher strength can increase cohesion of the first coating, and the cohesion can counteract part of tensile stress of the current collector, thereby enhancing strength of the current collector, so that the current collector is unlikely to break during processing. Further, the first coating enhances the adhesion between the second coating and the current collector, so that an amount of the binder in the second coating can be reduced, and a proportion of a negative electrode active material in the negative electrode is increased, thereby increasing the energy density of lithium-ion batteries.

### BRIEF DESCRIPTION OF DRAWINGS

To describe the technical solutions in embodiments of this application and in the prior art more clearly, the following briefly describes the accompanying drawings required for describing some embodiments and the prior art. Apparently, the accompanying drawings in the following description show merely some of the embodiments of this application, and persons of ordinary skill in the art may still derive other drawings from these accompanying drawings without creative efforts.

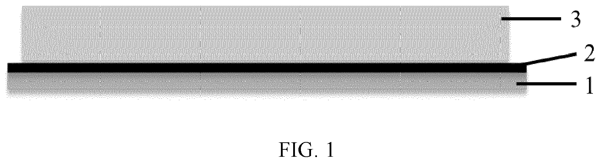

FIG. 1 is a schematic structural diagram of a negative electrode plate.

### DETAILED DESCRIPTION

To make the objectives, technical solutions, and advantages of this application more comprehensible, the following describes this application in detail with reference to accompanying drawings and embodiments. Apparently, the described embodiments are merely some rather than all of the embodiments of this application. All other embodiments obtained by persons of ordinary skill in the art based on the embodiments of this application without creative efforts shall fall within the protection scope of this application.

A first aspect of this application provides an electrochemical apparatus. As shown in FIG. 1, the electrochemical apparatus includes a negative electrode. The negative electrode includes a current collector 1, a first coating 2, and a second coating 3. The second coating 3 is provided on at least one surface of the current collector 1. The first coating 2 is provided between the current collector 1 and the second coating 3, and the first coating 2 contains inorganic particles. A peeling force F between the first coating 2 and the second coating 3 satisfies 15 N≤F≤30 N.

In this application, the second coating 3 may be a negative electrode active material layer. The inventors have found in research that after the inorganic particles are added to the first coating 2, the peeling force between the first coating 2 and the second coating 3 can be obviously enhanced. Without being limited by any theory, the inventors argue that this is because the inorganic particles being wrapped by the binder to form an adhesion unit with higher strength enhances the adhesion strength and increases the adhesion sites between the active material in the second coating 3 and the first coating 2.

In this application, the peeling force between the first coating and the negative electrode active material layer of the negative electrode plate can be up to 15 N to 30 N. In the prior art, a peeling force between a negative electrode active material layer and a current collector or an adhesive coating is unlikely to reach 10 N or higher. In the negative electrode plate of this application, the peeling force between the negative electrode active material layer and the electrode plate is obviously higher than that of the existing negative electrode plates.

It should be understood by persons skilled in the art that the current collector in this application may have the first coating and the second coating on one or two surfaces of the current collector. Persons skilled in the art can make a selection depending on an actual need.

In some embodiments of the first aspect of this application, a Dᵥ50 particle size of the inorganic particles satisfies 50 nm≤Dᵥ50≤1 µm. The inventors have found in research that the median particle size Dᵥ50 of the inorganic particles being greater than 50 nm can avoid agglomeration of the inorganic particles, and that the median particle size Dᵥ50 of the inorganic particles being greater than 1 µm makes the surface of the first coating uneven, affecting the performance of lithium-ion batteries. The median particle size Dᵥ50 of the inorganic particles being controlled within the foregoing range can ensure that thickness of the negative electrode will not be increased due to the thickness of the first coating, thereby avoiding loss of the volumetric energy density of lithium-ion batteries, and can also guarantee the evenness of the surface of the first coating, so that the performance of lithium-ion batteries is not affected.

In some embodiments of the first aspect of this application, a Mohs hardness of the inorganic particles is 2.5 to 7.5. The inventors have found in research that, with insufficient hardness, the inorganic particles are likely to deform during cold pressing, leading to lower stability of an internal structure of the first coating, and accordingly affecting strength of an adhesion unit formed by the inorganic particles and the binder; and with excessive hardness, the inorganic particles may cause obvious abrasion of a coating device. In this application, a type of the inorganic particles is not particularly limited, provided that the Mohs hardness is within the range from 2.5 to 7.5 and the objectives of this application can be achieved. For example, the inorganic particles may include at least one of boehmite, aluminum powder, quartz sand, apatite, nanoceramics, or zircon, where a Mohs hardness of the zircon is about 7.5, a Mohs hardness of the quartz sand is about 7, a Mohs hardness of the nanoceramics is about 6, a Mohs hardness of the boehmite is about 3, a Mohs hardness of the aluminum powder is 2.75, and a Mohs hardness of the apatite is 5. The inventors have found that the inorganic particles used in this application have high compatibility with organic substances and are easy to disperse, and therefore are more suitable for being used as an additive for the first coating 2.

In some embodiments of the first aspect of this application, the first coating further includes a conductive agent, a binder, and a dispersant, and based on a total mass of the first coating, a mass ratio of the inorganic particles, the binder, the conductive agent, and the dispersant is (2%-10%):(30%-60%):(30%-60%):(2%-5%). The inventors have found in research that when a mass of the inorganic particles accounts for less than 2% of the total mass of the first coating, the inorganic particles cannot play the effect of high strength; when the mass of the inorganic particles accounts for greater than 10% of the total mass of the first coating, the inorganic particles are difficult to disperse, are likely to agglomerate together, and may also increase internal resistance of the electrode plate; a mass of the dispersant being controlled to be 2% to 5% of the total mass of the first coating enables the first coating to have an even and stable internal structure and effectively prevents agglomeration of the inorganic particles; when a mass of the binder accounts for less than 30% of the total mass of the first coating, there is no obvious adhesion effect; when the mass of the binder accounts for greater than 60% of the total mass of the first coating, the excessive binder may easily cause agglomeration of the inorganic particles; and a mass of the conductive agent being controlled to be 30% to 60% of the total mass of the first coating improves conductive performance of the negative electrode.

In this application, a type of the binder is not particularly limited, provided that the objectives of this application can be achieved. For example, the binder may include at least one of styrene-butadiene rubber, polyacrylic acid, polyvinyl alcohol, polyethylene glycol, polyvinylidene fluoride, polyvinyl chloride, formaldehyde resin, cyclodextrin, or cyanoacrylate. The addition of the binder can improve the viscosity of the first coating, thereby respectively enhancing adhesion between the first coating and the current collector of the negative electrode and adhesion between the first coating and the second coating, and also reducing the amount of the binder in the second coating.

In this application, a type of the dispersant is not particularly limited, provided that the objectives of this application can be achieved. For example, the dispersant may include at least one of sodium hydroxymethyl cellulose, lithium hydroxymethyl cellulose, sodium alginate, propylene glycol alginate, methylcellulose, starch sodium phosphate, sodium carboxymethyl cellulose, sodium alginate protein, casein, sodium polyacrylate, polyoxyethylene, or polyvinylpyrrolidone. The addition of the dispersant can improve evenness and stability of the internal structure of the first coating and prevent agglomeration of the inorganic particles.

In some embodiments of the first aspect of this application, the conductive agent may include at least one of a zero-dimensional conductive agent or a one-dimensional conductive agent.

In this application, a type of the zero-dimensional conductive agent and a type of the one-dimensional conductive agent are not particularly limited, provided that the objectives of this application can be achieved. For example, the zero-dimensional conductive agent may include at least one of conductive carbon black, acetylene black, superconductive carbon black, grained graphite, or Ketjen black; a median particle size Dᵥ50 of the zero-dimensional conductive agent is 50 nm to 1 µm; the one-dimensional conductive agent includes at least one of a conductive carbon tube or a conductive carbon rod; and an average diameter of the one-dimensional conductive agent is 50 nm to 1 µm. The addition of the conductive agent can improve the conductive performance of the negative electrode. The median particle size or average diameter of the conductive agent being controlled within the foregoing range can effectively control thickness of the first coating and prevent loss of volumetric energy density of lithium-ion batteries.

In some embodiments of the first aspect of this application, thickness L of the first coating 2 satisfies 100 nm≤L≤2 µm, preferably 200 nm≤L≤1 µm. The thickness of the first coating being controlled within the foregoing range can effectively control increase of thickness of the negative electrode, thereby improving the energy density of lithium-ion batteries.

In some embodiments of the first aspect of this application, coating weight X of the first coating 2 satisfies 0.02 mg/cm²≤X≤0.15 mg/cm². The coating weight of the first coating being controlled within the foregoing range can effectively control the thickness and coating evenness of the first coating, can enable the first coating to effectively play the performance, thereby increasing the energy density of lithium-ion batteries.

In some embodiments of the first aspect of this application, a cover rate of the first coating on the current collector is 50% to 100%. The cover rate of the first coating being controlled to be more than 50% enables the first coating to effectively play its functions, thereby improving performance of lithium-ion batteries.

In some embodiments of the first aspect of this application, the peeling force between the first coating 2 and the current collector 1 is 10 N/m to 300 N/m.

In some embodiments of the first aspect of this application, resistance of the negative electrode plate is 1 mQ to 100 mΩ. The inventors have found in research that the resistance of the negative electrode plate being within the foregoing range can enhance polarization of lithium-ion batteries and reduce release of electric energy, thereby improving the safety of lithium-ion batteries.

In the negative electrode in this application, the current collector is not particularly limited, and any negative electrode current collector commonly known in the art can be used, for example, a copper foil, an aluminum foil, an aluminum alloy foil, or a composite current collector. The negative electrode active material layer includes a negative electrode active material. The negative electrode active material is not particularly limited, and any negative electrode active material known in the art may be used. For example, the negative electrode active material may include at least one of artificial graphite, natural graphite, mesocarbon microbeads, silicon, silicon carbon, silicon-oxygen compound, soft carbon, hard carbon, lithium titanate, niobium titanate, or the like. In this application, thicknesses of the negative electrode current collector and the negative electrode active material layer are not particularly limited, provided that the objectives of this application can be achieved. For example, the thickness of the negative electrode current collector is 6 µm to 10 µm, and the thickness of the negative electrode active material layer is 30 µm to 120 µm.

The positive electrode in this application is not particularly limited, provided that the objectives of this application can be achieved. For example, the positive electrode typically includes a positive electrode current collector and a positive electrode active material layer. The positive electrode current collector is not particularly limited and may be any positive electrode current collector commonly known in the art, for example, a copper foil, an aluminum foil, an aluminum alloy foil, or a composite current collector. The positive electrode active material layer includes a positive electrode active material. The positive electrode active material is not particularly limited, and may be any positive electrode active material commonly known in the art, for example, at least one of lithium nickel cobalt manganate (811, 622, 523, 111), lithium nickel cobalt aluminate, lithium iron phosphate, a lithium-rich manganese-based material, lithium cobaltate, lithium manganate, lithium iron manganese phosphate, or lithium titanate. In this application, thicknesses of the positive electrode current collector and the positive electrode active material layer are not particularly limited, provided that the objectives of this application can be achieved. For example, the thickness of the positive electrode current collector is 8 µm to 12 µm, and the thickness of the positive electrode material layer is 30 µm to 120 µm.

Optionally, the positive electrode may further include a conductive layer. The conductive layer is sandwiched between the positive electrode current collector and the positive electrode active material layer. Composition of the conductive layer is not particularly limited, and the conductive layer may be a conductive layer commonly used in the art. The conductive layer includes a conductive agent and a binder.

The lithium-ion battery in this application further includes a separator configured to separate the positive electrode from the negative electrode, thereby preventing internal short circuit in the battery, allowing electrolyte ions to pass through, and implementing electrochemical charge and discharge processes. The separator in this application is not particularly limited, provided that the objectives of this application can be achieved.

For example, the separator may be at least one of a polyethylene (PE) and polypropylene (PP)-based polyolefin (PO) separator, a polyester film (for example, polyethylene terephthalate (PET) film), a cellulose film, a polyimide film (PI), a polyamide film (PA), a spandex or aramid film, a woven film, a non-woven film (non-woven fabric), a microporous film, a composite film, a separator paper, a laminated film, a spinning film, or the like

For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, polyimide, or the like. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by mixing a polymer and an inorganic substance.

For example, the inorganic substance layer includes inorganic particles and a binder. The inorganic particles are not particularly limited, and may be selected from, for example, at least one of a group consisting of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be selected from, for example, a combination of one or more selected from a group consisting of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyvinyl ether, polymethyl methacrylate, polytetrafluoroethylene, or polyhexafluoropropylene. The polymer layer contains a polymer, and the polymer is made of at least one of polyamide, polyacrylonitrile, an acrylate polymer, polyacrylic acid, polyacrylate, polyvinylpyrrolidone, polyvinyl ether, polyvinylidene fluoride, poly(vinylidene fluoride-hexafluoropropylene), and the like.

The lithium-ion battery in this application further includes an electrolyte. The electrolyte may be one or more selected from a group consisting of a gel electrolyte, a solid electrolyte, and a liquid electrolyte. The liquid electrolyte includes a lithium salt and a non-aqueous solvent.

In some embodiments of the first aspect of this application, the lithium salt is one or more selected from a group consisting of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, LiPF₆ may be selected as the lithium salt because it can provide high ionic conductivity and improve the cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An instance of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An instance of the cyclic carbonate compound is ethylene carbonate (EC), propylene carbonate (PC), butylene carbonate (BC), vinyl ethylene carbonate (VEC), or a combination thereof. An instance of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methyl ethylene carbonate, 1,1,2-trifluoro-2-methylethylene carbonate, trifluoromethylethylene carbonate, or a combination thereof.

An instance of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof.

An instance of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An instance of the another organic solvent is dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, or a combination thereof.

A process for manufacturing the electrochemical apparatus is well known to persons skilled in the art, and is not particularly limited in this application. For example, the electrochemical apparatus may be manufactured in the following process: a positive electrode and a negative electrode are stacked with a separator therebetween, and are put into a housing after operations such as winding and folding as required. An electrolyte is injected into the housing and then the housing is sealed. In addition, if necessary, an overcurrent prevention element, a guide plate, or the like may be placed in the housing to prevent pressure increase, overcharge, and overdischarge in the electrochemical apparatus.

A second aspect of this application provides an electronic apparatus including the electrochemical apparatus according to the first aspect of this application.

The electronic apparatus in this application is not particularly limited, and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

The following describes this application in detail based on some embodiments, but this application is not limited to these embodiments.

### Test method and device

### Test method for median particle size Dᵥ50 of inorganic particles

A laser particle size analyzer MS3000 of Malvern was used to test the median particle size Dᵥ50 of inorganic particles.

Dᵥ50 is a particle size of inorganic particles where the cumulative distribution of the inorganic particles by volume reaches 50% as counted from the small particle size side, in other words, a volume of inorganic particles with a particle size less than this particle size accounts for 50% of a total volume of the inorganic particles.

### Thickness test for first coating and second coating

(1) A negative electrode plate coated with a first coating and a second coating was taken from a finished lithium-ion battery.
(2) The negative electrode plate obtained in (1) was cut along a thickness direction of the negative electrode plate by using the plasma cutting technology, to obtain a cross section of the first coating and the second coating.
(3) The cross section of the first coating and the second coating obtained in (2) was observed under an SEM (scanning electron microscope) (the cross section observed needed to have a length not less than 2 cm), to separately test the thickness of the first coating and the second coating under the SEM, with 15 or more different positions tested for each layer, and the average thickness value of all tested positions of each layer was recorded as the thickness value of the corresponding layer

### Test method for cover rate of first coating

(1) The actual area of the electrode plate was denoted as S1.
(2) The electrode plate was soaked in deionized water for 2 h, then a graphite layer on an upper layer of the electrode plate was wiped away, and an area of a bottom coating exposed was denoted as S2.
(3) A cover rate B of the coating was calculated by using the following formula: B=S2/S1 × 100%.

### Adhesion test for first coating and second coating

(1) A knife blade was used to cut the negative electrode plates prepared in Examples 1 to 19 and Comparative Examples 1 and 2 to obtain a sample with a width of 30 mm and a length of 100 mm to 160 mm.
(2) A special double-sided adhesive was pasted to a steel plate, where the adhesive had a width of 20 mm and a length of 90 mm to 150 mm.
(3) The electrode plate sample obtained in step (1) was pasted to the double-sided adhesive, with a test surface facing downward.
(4) A paper tape that was as wide as the electrode plate and 80 mm to 200 mm longer than the electrode plate was inserted below the electrode plate and fastened by using a crepe paper tape.
(5) A Sunstest tensile machine was powered on, then an indicator light was lighted, and a restraint block was adjusted to an appropriate position.
(6) A test button was pressed to start a test mode of a device, and data was read after the test was ended.

### Adhesion test for first coating and current collector

(1) A knife blade was used to cut the negative electrode plate that had been provided with the first coating but had not been coated with a negative electrode active material layer in a process for preparing the negative electrode plate in Examples 1 to 19 and Comparative Examples 1 and 2, to obtain a sample with a width of 30 mm and a length of 100 mm to 160 mm.
(2) A special double-sided adhesive was pasted to a steel plate, where the adhesive had a width of 20 mm and a length of 90 mm to 150 mm.
(3) The electrode plate sample obtained in step (1) was pasted to the double-sided adhesive, with a test surface facing downward.
(4) A paper tape that was as wide as the electrode plate and 80 mm to 200 mm longer than the electrode plate was inserted below the electrode plate and fastened by using a crepe paper tape.
(5) A Sunstest tensile machine was powered on, then an indicator light was lighted, and a restraint block was adjusted to an appropriate position.
(6) A test button was pressed to start a test mode of a device, and data was read after the test was ended.

### Cycling performance test

At a test temperature of 25°C/45°C, the battery was charged to 4.4 V at a constant current of 0.7C, charged to 0.025C at a constant voltage, left standing for 5 min, and then discharged to 3.0 V at 0.5C. A capacity obtained in this cycle was the initial capacity. Then, a 0.7C charge or 0.5C discharge cycling test was performed. A ratio of the capacity of each cycle to the initial capacity was calculated to obtain a capacity degradation curve. The number of cycles to a capacity retention rate of 90% at 25°C was recorded as cycling performance of the lithium-ion battery under room temperature; and the number of cycles to a capacity retention rate of 80% at 45°C was recorded as cycling performance of the lithium-ion battery under high temperature. The numbers of cycles in the above two cases were compared to obtain cycling performance of the material.

### Discharging rate test

At 25°C, the battery was discharged to 3.0 V at 0.2C, left standing for 5 min, charged to 4.45 V at 0.5C, charged to 0.05C at a constant voltage, and then left standing for 5 min; discharge rates were adjusted to 0.2C, 0.5C, 1C, 1.5C, and 2.0C, and discharge tests were performed under these rates to obtain respective discharge capacities; the capacity obtained at each rate was compared with the capacity obtained at 0.2C; and the capacity at 2C and the capacity at 0.2C were compared for comparing rate performance.

### Example 1

### <Preparation of first coating slurry>

Carbon nanotubes and sodium carboxymethyl cellulose (CMC) were uniformly dispersed in a stirring tank; a specific amount of deionized water was added to accelerate the dispersion; after the sodium carboxymethyl cellulose was completely dissolved with no micelles generated, a specific amount of quartz sand was poured into the resulting solution, the three materials were mixed and dispersed; finally the binder styrene-butadiene rubber was added; and then the resulting mixture was dispersed to obtain the first coating slurry. A mass ratio of the carbon nanotubes, the sodium carboxymethyl cellulose, the quartz sand, and the styrene-butadiene rubber was 37:4:4:55, and Dᵥ50 of the quartz sand was 200 nm.

### <Preparation of negative electrode plate including first coating>

The first coating slurry prepared was applied on a surface of a copper foil negative electrode current collector to obtain a first coating with a thickness of 380 nm, a cover rate of the first coating was 90%, and a coating weight of the first coating was 0.08 mg/cm².

Graphite serving as a negative electrode active material, a styrene-butadiene polymer, and sodium carboxymethyl cellulose were mixed at a mass ratio of 97.5: 1.3 : 1.2, with deionized water added as a solvent, to prepare a slurry with a solid content of 70%. The slurry was uniformly applied on the first coating, dried at 110°C, and cold pressed to obtain a negative electrode plate with a single surface coated with the first coating and a negative electrode active material layer, where the negative electrode active material layer was 150 µm in thickness.

After the foregoing steps were completed, the same method was used to complete these steps on the back of the negative electrode plate to obtain the negative electrode plate with both surfaces coated. After coating was completed, the negative electrode plate was cut into a size of 76 mm×851 mm and then welded with a tab for later use.

### <Preparation of positive electrode plate>

As positive electrode active materials, lithium cobaltate (LiCoO₂), conductive carbon black (Super P), and polyvinylidene fluoride (PVDF) were mixed at a weight ratio of 97.5:1.0:1.5, and N-methylpyrrolidone (NMP) was added as a solvent, to prepare a slurry with a solid content of 75%, and the slurry was stirred to uniformity. The slurry was uniformly applied on one surface of an aluminum foil positive electrode current collector with a thickness of 10 µm and dried at 90°C to obtain a positive electrode plate with a coating thickness of 110 µm. After the foregoing steps were completed, single surface coating of the positive electrode plate was completed. Then, the foregoing steps were repeated on the other surface of the positive electrode plate to obtain a positive electrode plate with both surfaces coated with positive electrode active materials. After coating was completed, the electrode plate was cut into a size of 38 mm × 58 mm for later use.

### <Preparation of electrolyte>

In a dry argon atmosphere, organic solvents ethylene carbonate, ethyl methyl carbonate, and diethyl carbonate were mixed at a mass ratio of EC:EMC:DEC=30:50:20 to obtain an organic solution, and then a lithium salt lithium hexafluorophosphate was dissolved in the organic solvents and mixed to uniformity to obtain an electrolyte with a lithium salt concentration of 1.15 mol/L.

### <Preparation of separator>

Aluminum oxide and polyvinylidene fluoride were mixed at a mass ratio of 90:10, and dissolved in deionized water to obtain a ceramic slurry with a solid content of 50%. Subsequently, the ceramic slurry was uniformly applied on one surface of a porous substrate (polyethylene, with a thickness of 7 µm, an average pore size of 0.073 µm, and a porosity of 26%) by using a micro-concave coating method, followed by drying to obtain a double-layer structure with a ceramic coating and the porous substrate, where the ceramic coating had a thickness of 50 µm.

Polyvinylidene fluoride (PVDF) and polyacrylic ester were mixed at a mass ratio of 96:4, and dissolved in deionized water to obtain a polymer slurry with a solid content of 50%. Subsequently, the polymer slurry was uniformly applied on two surfaces of the ceramic coating and porous substrate double-layer structure, followed by drying to obtain a separator, where each coating formed by the polymer slurry had a thickness of 2 µm .

### <Preparation of lithium-ion battery>

The positive electrode plate, separator, and negative electrode plate prepared were sequentially stacked to make sure that the separator was sandwiched between the positive electrode plate and the negative electrode plate to provide separation, and then the resulting stack was wound to obtain an electrode assembly. The electrode assembly was put into an aluminum-plastic film packaging bag, and was dehydrated at 80°C, and the prepared electrolyte was injected. Then, after processes such as vacuum packaging, standing, formation, and shaping, a lithium-ion battery was obtained.

### Example 2

Example 2 was the same as Example 1 except that the quartz sand was replaced with zircon powder.

### Example 3

Example 3 was the same as Example 1 except that the quartz sand was replaced with boehmite.

### Example 4

Example 4 was the same as Example 3 except that the mass ratio of the carbon nanotubes, the sodium carboxymethyl cellulose, the boehmite, and the styrene-butadiene rubber was adjusted to 37:4:3:56.

### Example 5

Example 5 was the same as Example 3 except that the mass ratio of the carbon nanotubes, the sodium carboxymethyl cellulose, the boehmite, and the styrene-butadiene rubber was adjusted to 37:4:5:54.

### Example 6

Example 6 was the same as Example 3 except that the mass ratio of the carbon nanotubes, the sodium carboxymethyl cellulose, the boehmite, and the styrene-butadiene rubber was adjusted to 37:4:10:49.

### Example 7

Example 7 was the same as Example 3 except that the binder styrene-butadiene rubber was replaced with a mixture of formaldehyde resin and cyclodextrin at a mass ratio of 1:1, and that the mass ratio of the carbon nanotubes, the sodium carboxymethyl cellulose, the boehmite, and the binder was adjusted to 57:4:4:35.

### Example 8

Example 8 was the same as Example 3 except that the binder styrene-butadiene rubber was replaced with a mixture of polyvinyl alcohol and polyacrylic acid at a mass ratio of 4:6, that the carbon nanotubes were replaced with conductive carbon rods, that the dispersant CMC was replaced with polyvinylpyrrolidone (PVP), and that the mass ratio of the conductive carbon rods, the PVP, the boehmite, and the binder was adjusted to 43:4:4:49.

### Example 9

Example 9 was the same as Example 3 except that the binder styrene-butadiene rubber was replaced with polyacrylonitrile, that the carbon nanotubes were replaced with acetylene black, that the dispersant CMC was replaced with casein, and that the mass ratio of the acetylene black, the casein, the boehmite, and the polyacrylonitrile was adjusted to 39:3:4:54.

### Example 10

Example 10 was the same as Example 3 except that the binder styrene-butadiene rubber was replaced with polyacrylic acid, that the dispersant CMC was replaced with sodium alginate (SA), and that the mass ratio of the carbon nanotubes, the SA, the boehmite, and the polyacrylic acid was adjusted to 38:2:4:56.

### Example 11

Example 11 was the same as Example 3 except that the binder styrene-butadiene rubber was replaced with a mixture of polyacrylonitrile, polyacrylic acid, and polyacrylic ester at a mass ratio of 4:5:1, and that the mass ratio of the carbon nanotubes, the sodium carboxymethyl cellulose, the boehmite, and the binder was adjusted to 32:5:4:59.

### Example 12

Example 12 was the same as Example 3 except that the carbon nanotubes were replaced with conductive carbon black, and that the coating weight was adjusted to 0.02 mg/cm².

### Examples 13 to 17

Examples 13 to 17 were the same as Example 12 except that the coating weights were adjusted to 0.05 mg/cm², 0.08 mg/cm², 0.1 mg/cm², 0.13 mg/cm², and 0.15 mg/cm², respectively.

### Example 18

Example 18 was the same as Example 3 except that Dᵥ50 of the boehmite was adjusted to 50 nm, and that the thickness of the first coating was adjusted to 1000 nm.

### Examples 19 to 26

Examples 19 to 26 were the same as Example 18 except that the particle sizes Dᵥ50 of the boehmite were adjusted to 100 nm, 150 nm, 200 nm, 300 nm, 350 nm, 400 nm, 800 nm, and 1000 nm.

### Example 27

Example 27 was the same as Example 3 except that Dᵥ50 of the boehmite was adjusted to 100 nm, and that the thickness of the first coating was adjusted to 100 nm.

### Examples 28to 34

Examples 28 to 34 were the same as Example 27 except that the thicknesses of the first coatings were adjusted to 220 nm, 300 nm, 380 nm, 580 nm, 650 nm, 800 nm, and 1700 nm.

### Examples 35 to 39

Examples 35 to 39 were the same as Example 3 except that the cover rates of the first coatings were adjusted to 100%, 80%, 70%, 60%, and 50%, respectively.

### Comparative Example 1

Comparative Example 1 was the same as Example 1 except that the mass ratio of the carbon nanotubes, the sodium carboxymethyl cellulose, the quartz sand, and the styrene-butadiene rubber was adjusted to 41:4:0:55.

### Comparative Example 2

Comparative Example 2 was the same as Example 3 except that the boehmite was replaced with aluminum oxide.

### Comparative Examples 3 and 4

Comparative Examples 3 and 4 were the same as Example 12 except that the coating weights were adjusted to 0.01 mg/cm² and 0.16 mg/cm², respectively.

### Comparative Examples 5 and 6

Comparative Examples 5 and 6 were the same as Example 18 except that the particle sizes Dᵥ50 of the boehmite were adjusted to 45 nm and 1050 nm.

### Comparative Examples 7 and 8

Comparative Examples 7 and 8 were the same as Example 27 except that the thicknesses of the first coatings were adjusted to 2100 nm and 50 nm.

### Comparative Example 9

Comparative Example 9 was the same as Example 3 except that the cover rate of the first coating was 45%.

Parameters and test results of the examples and comparative examples are shown in Table 1 to Table 5.

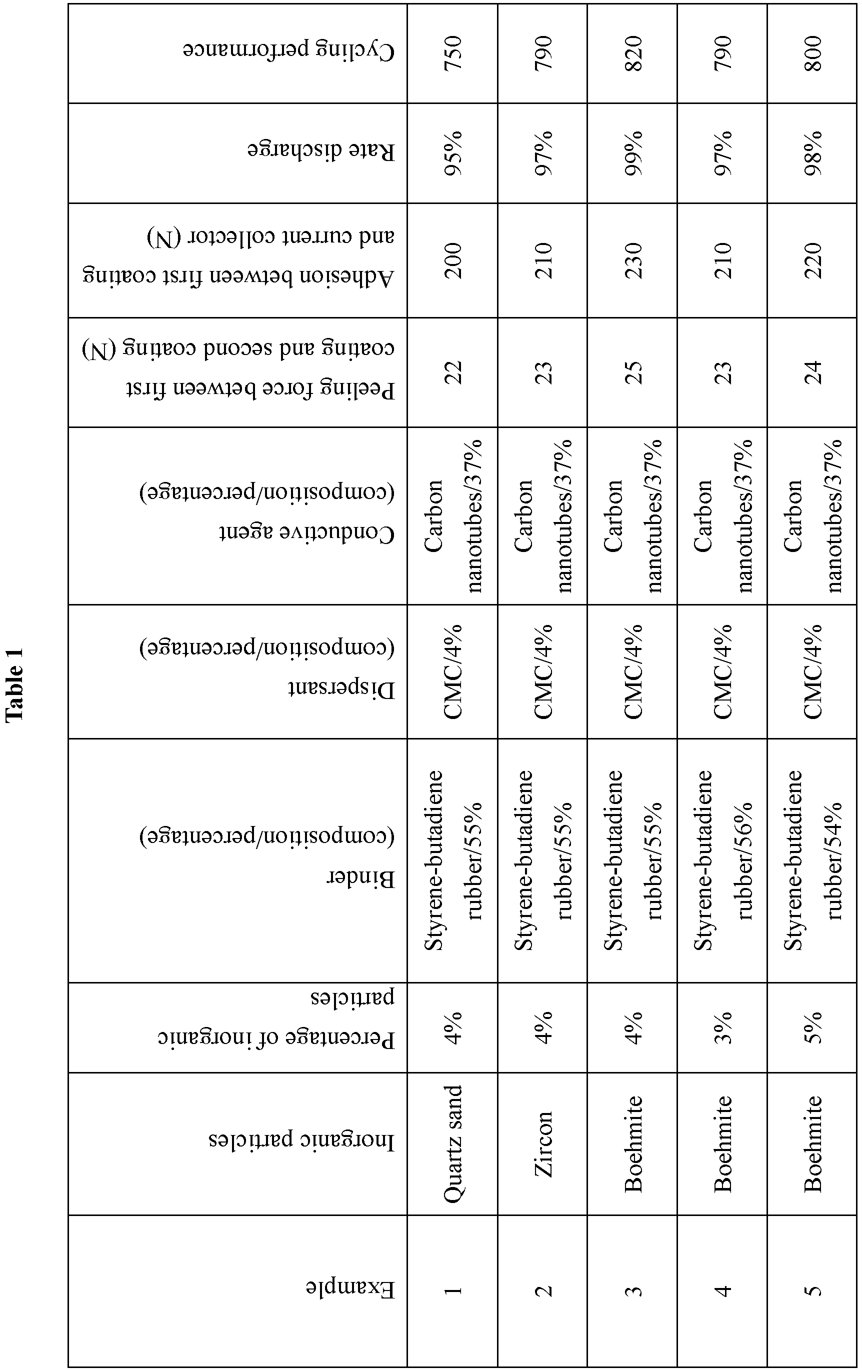

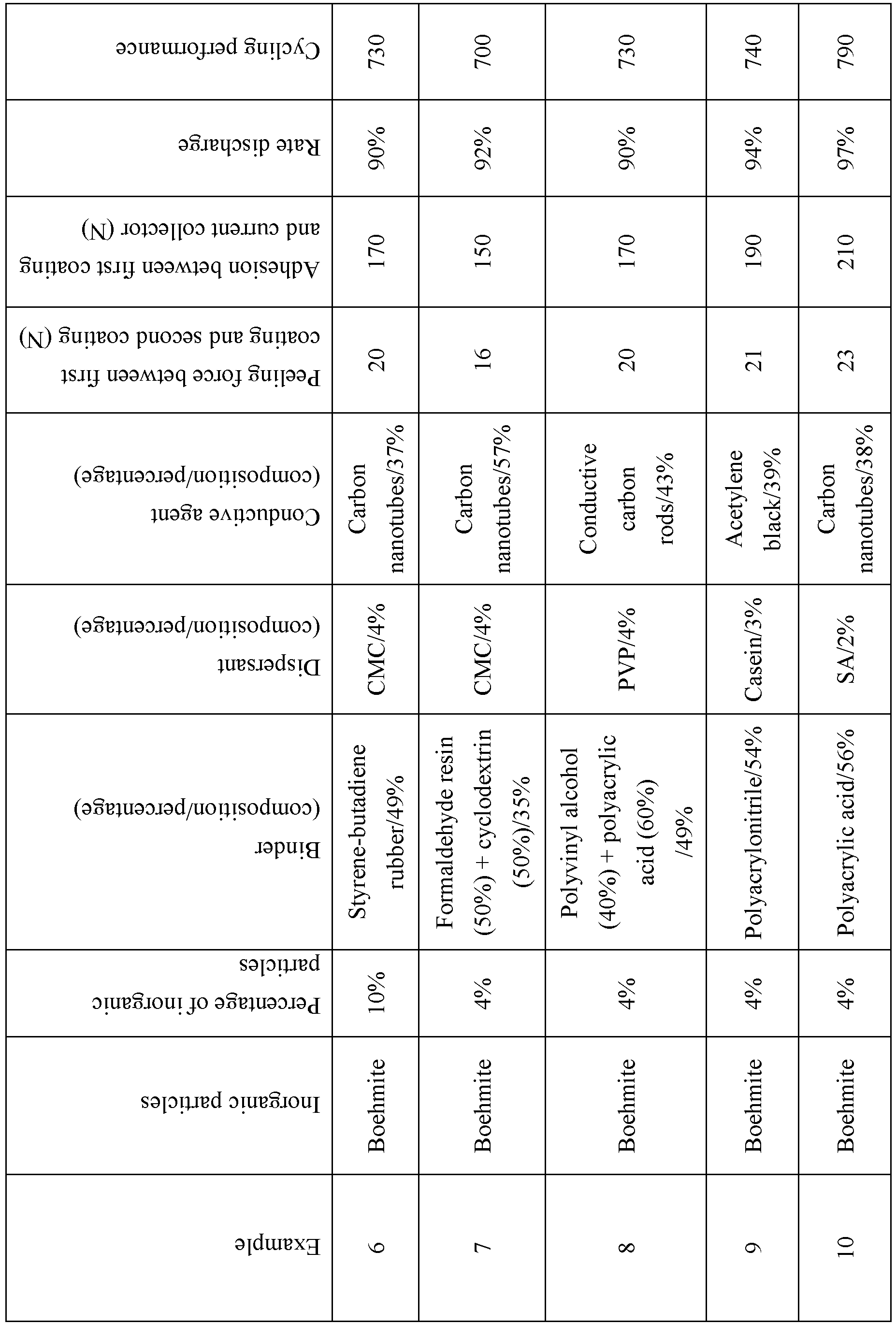

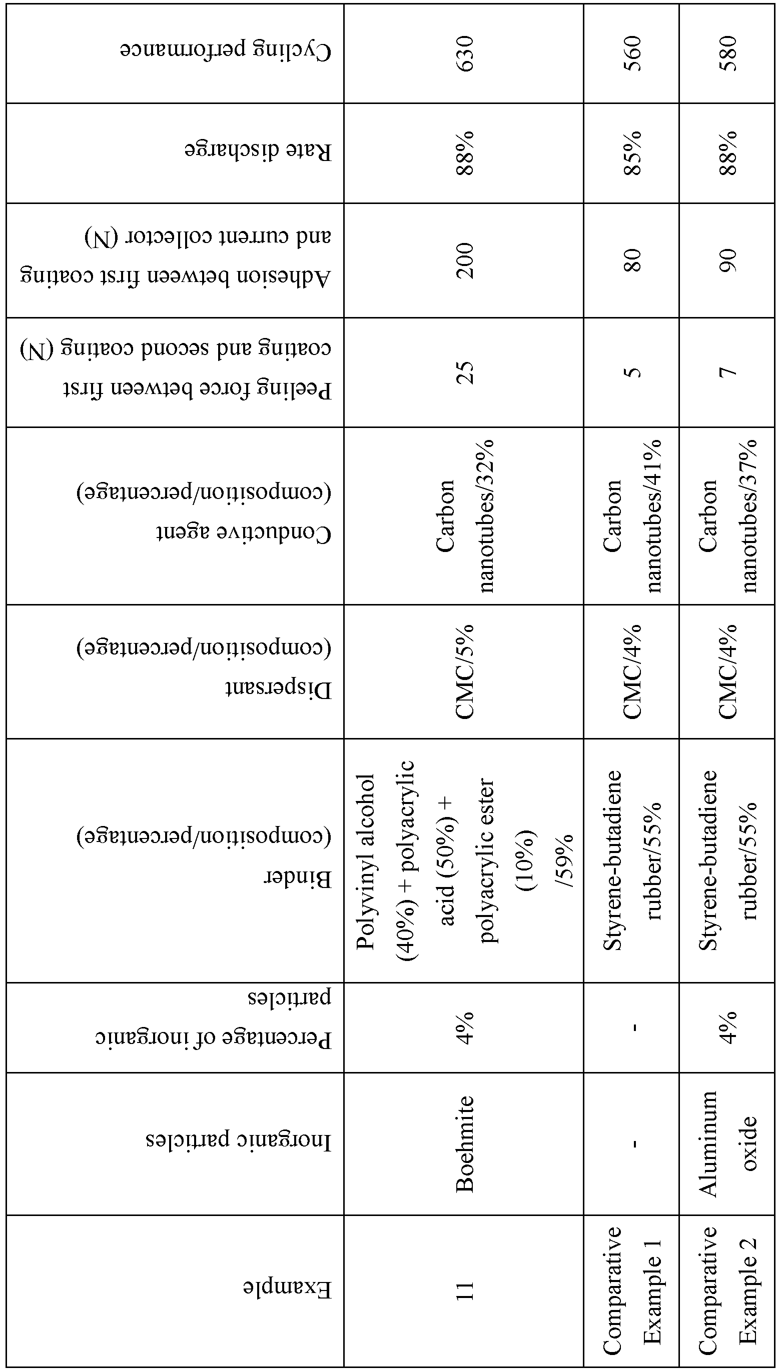

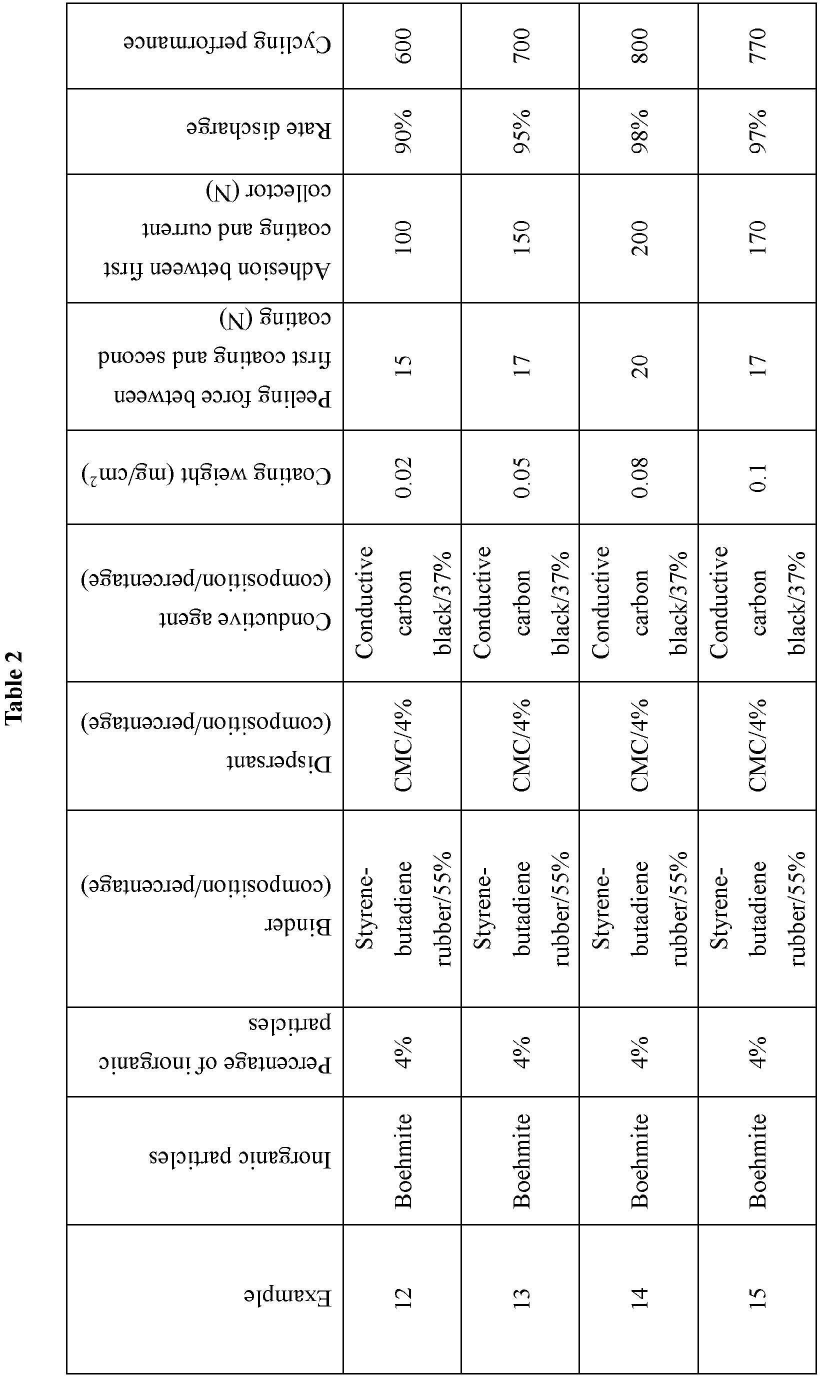

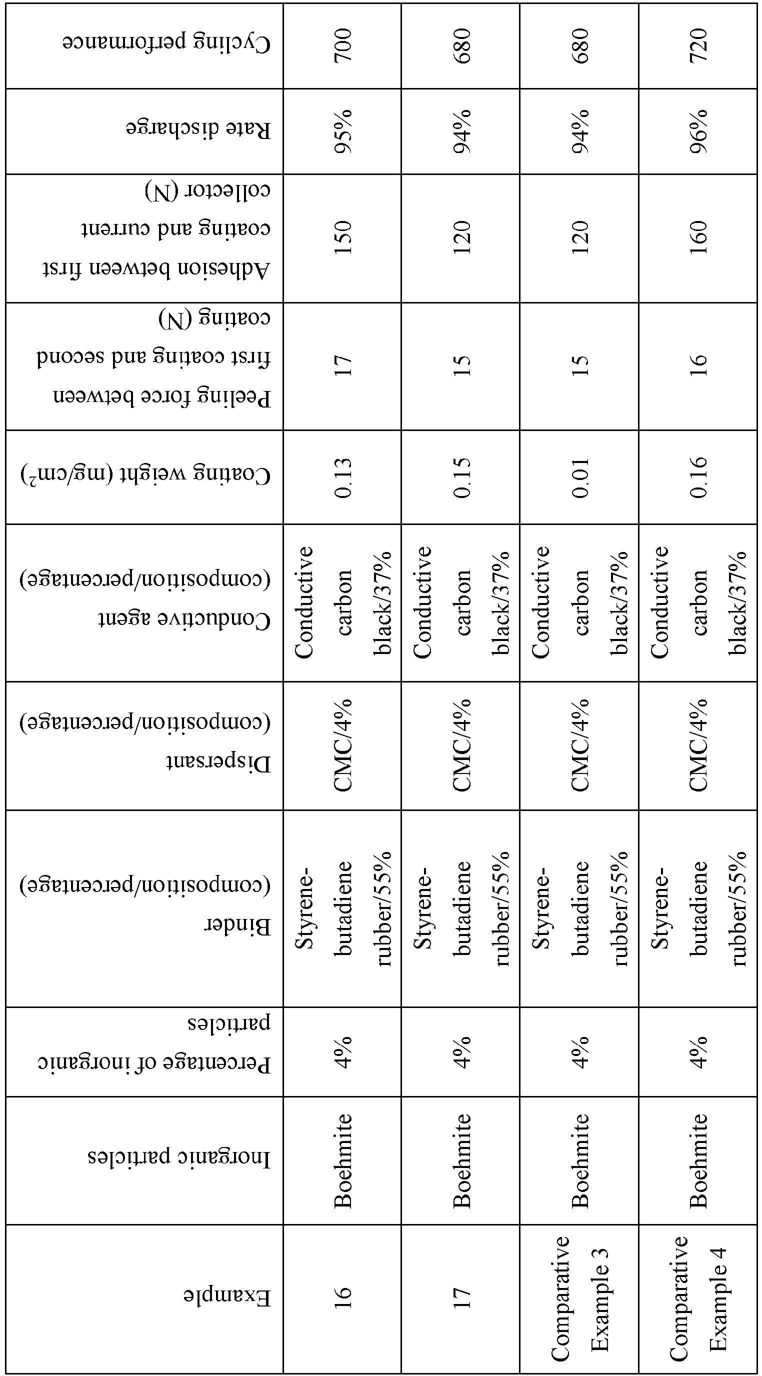

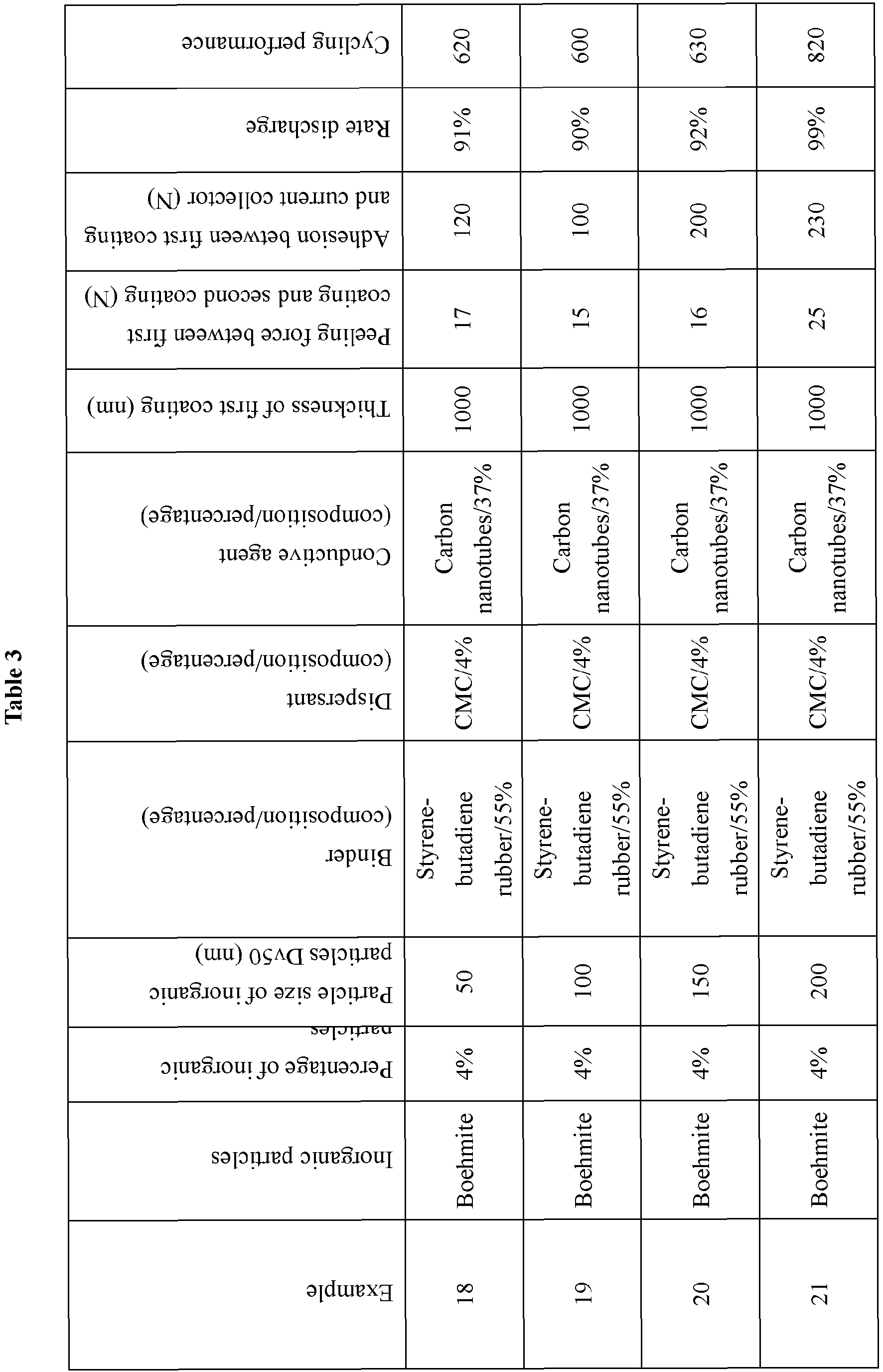

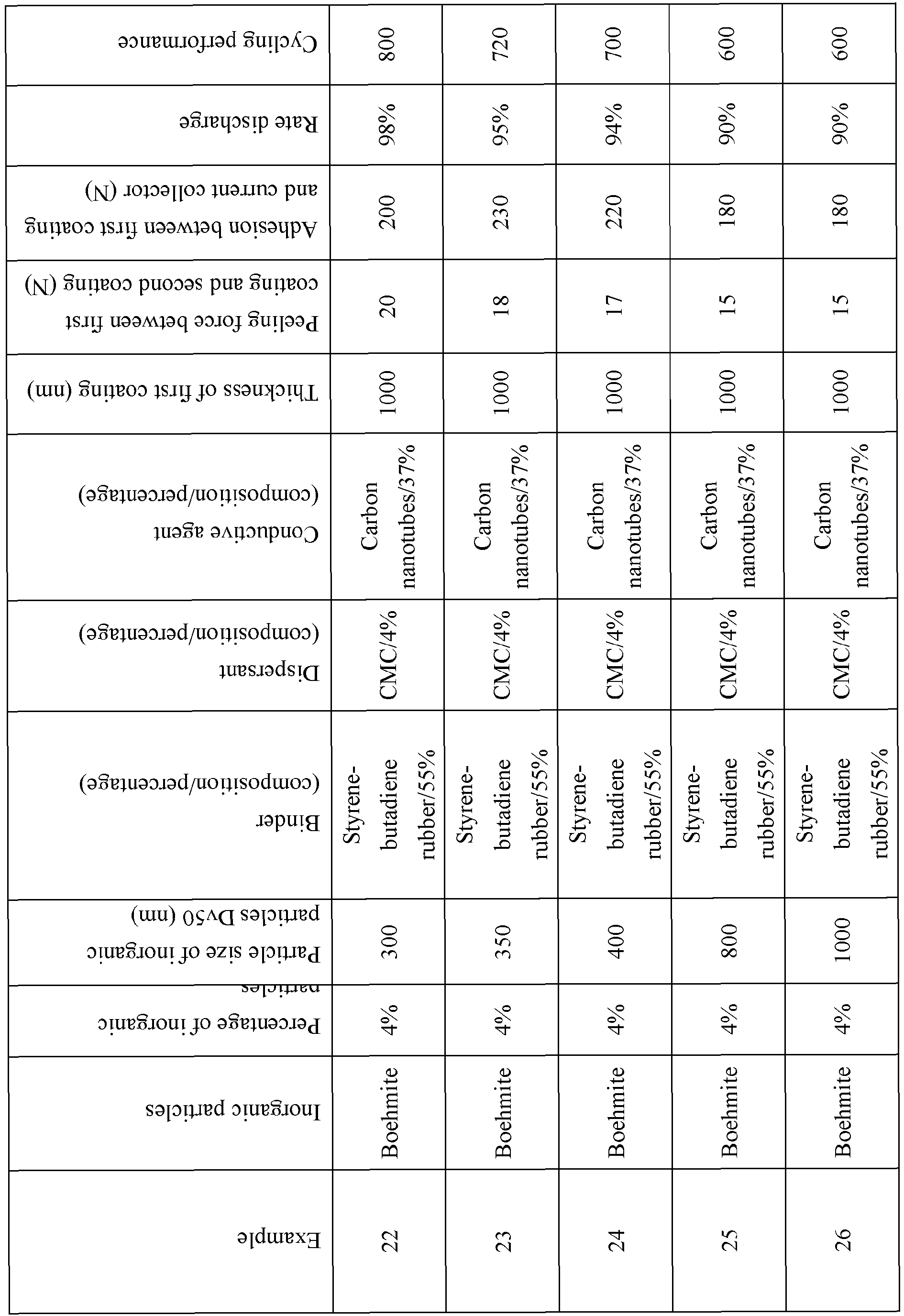

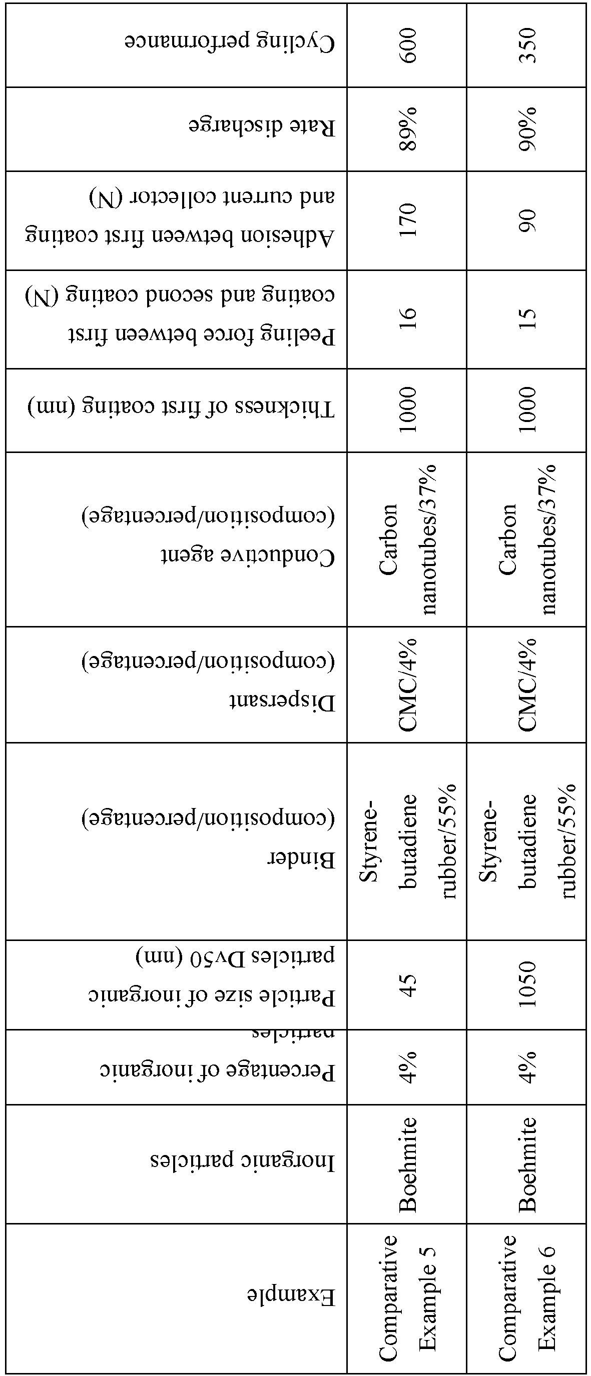

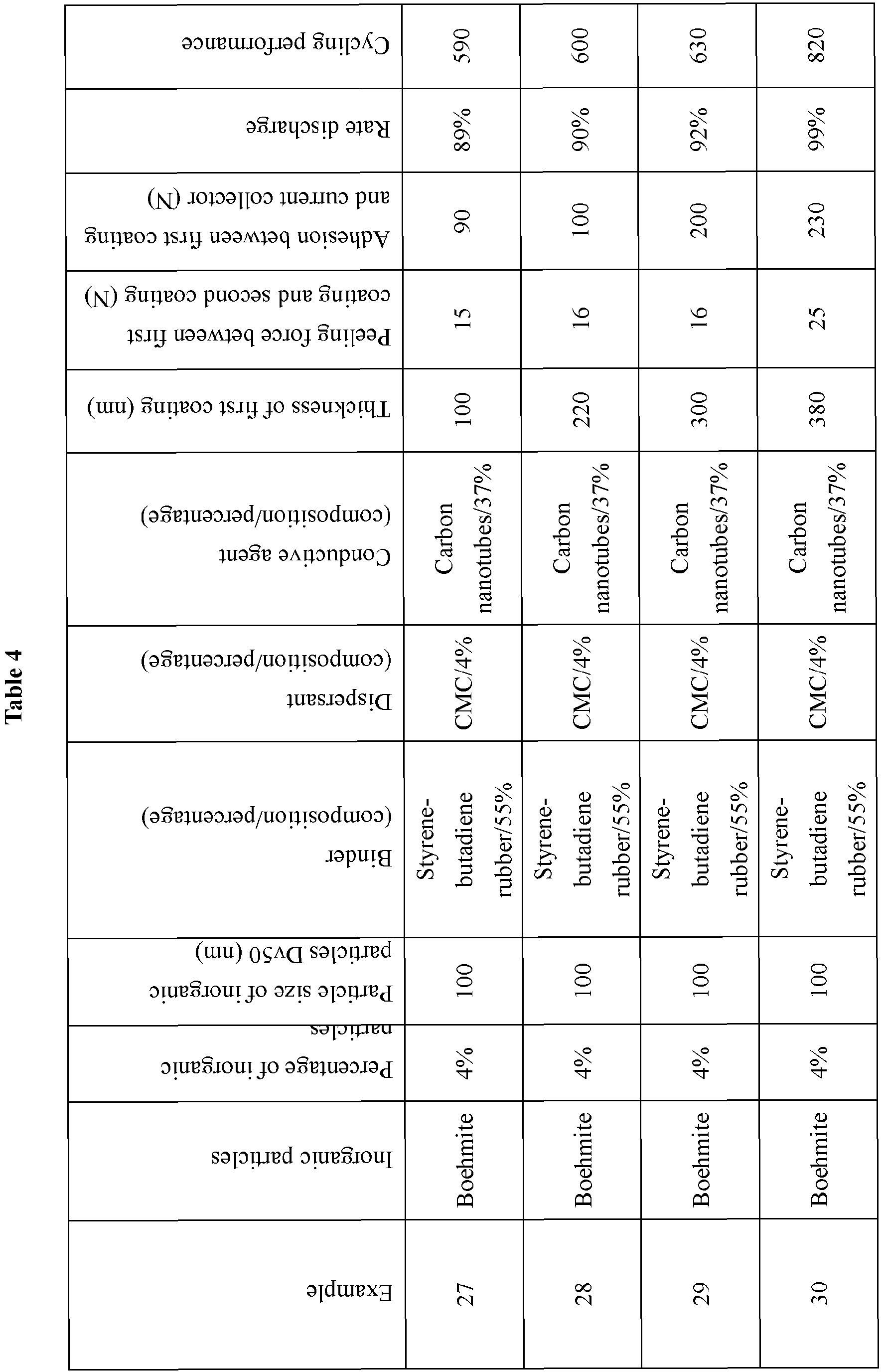

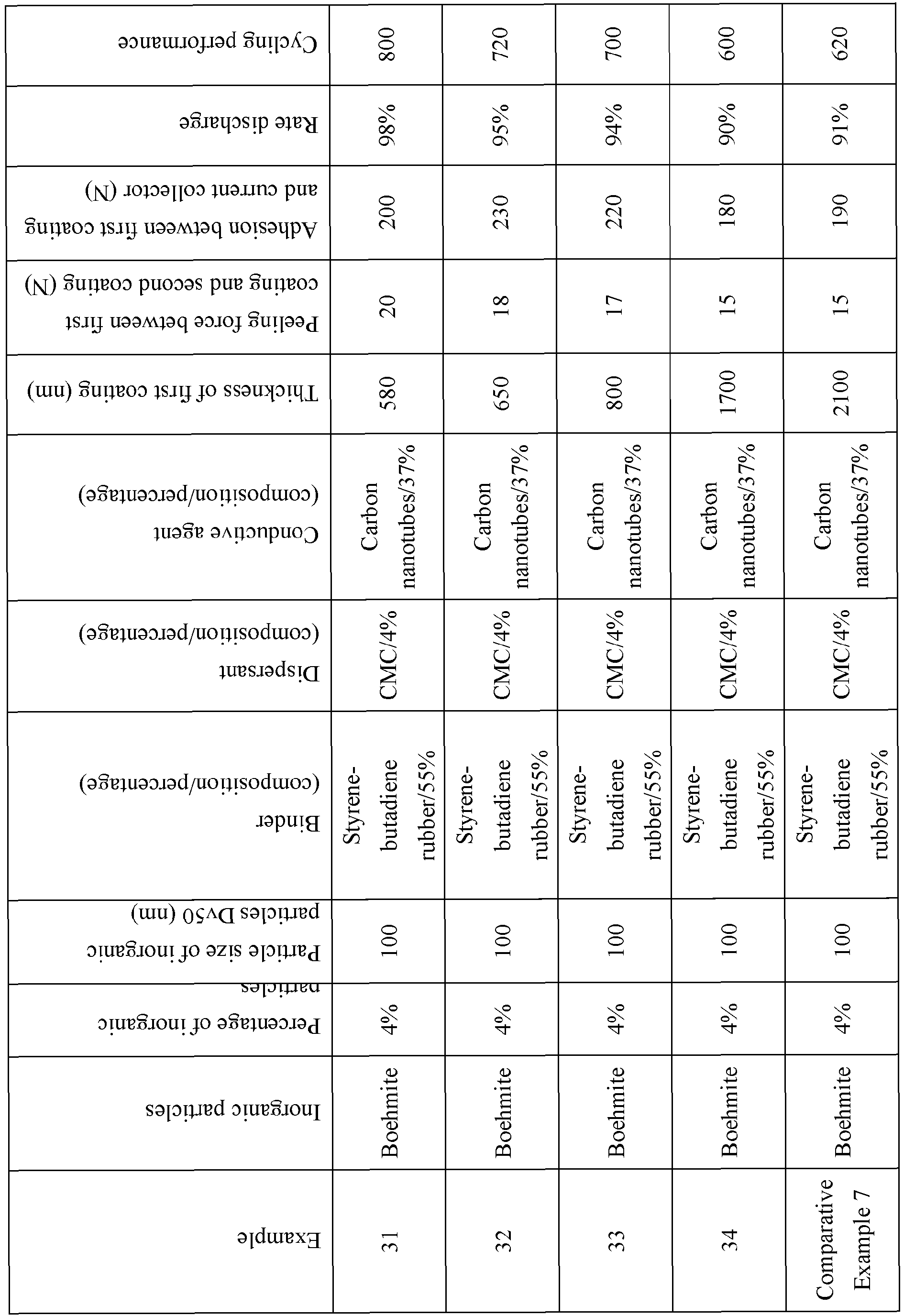

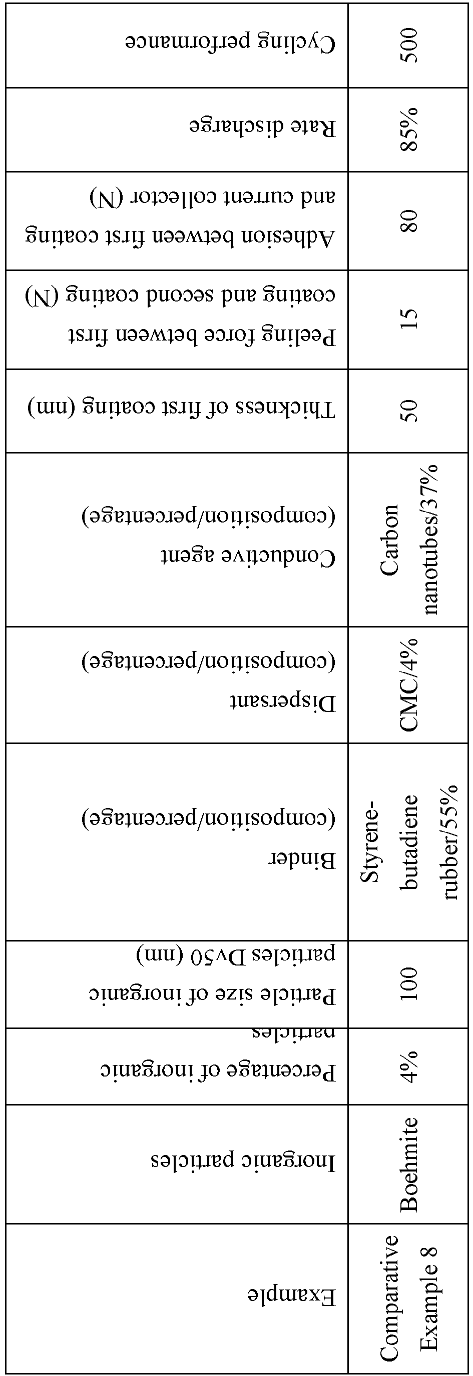

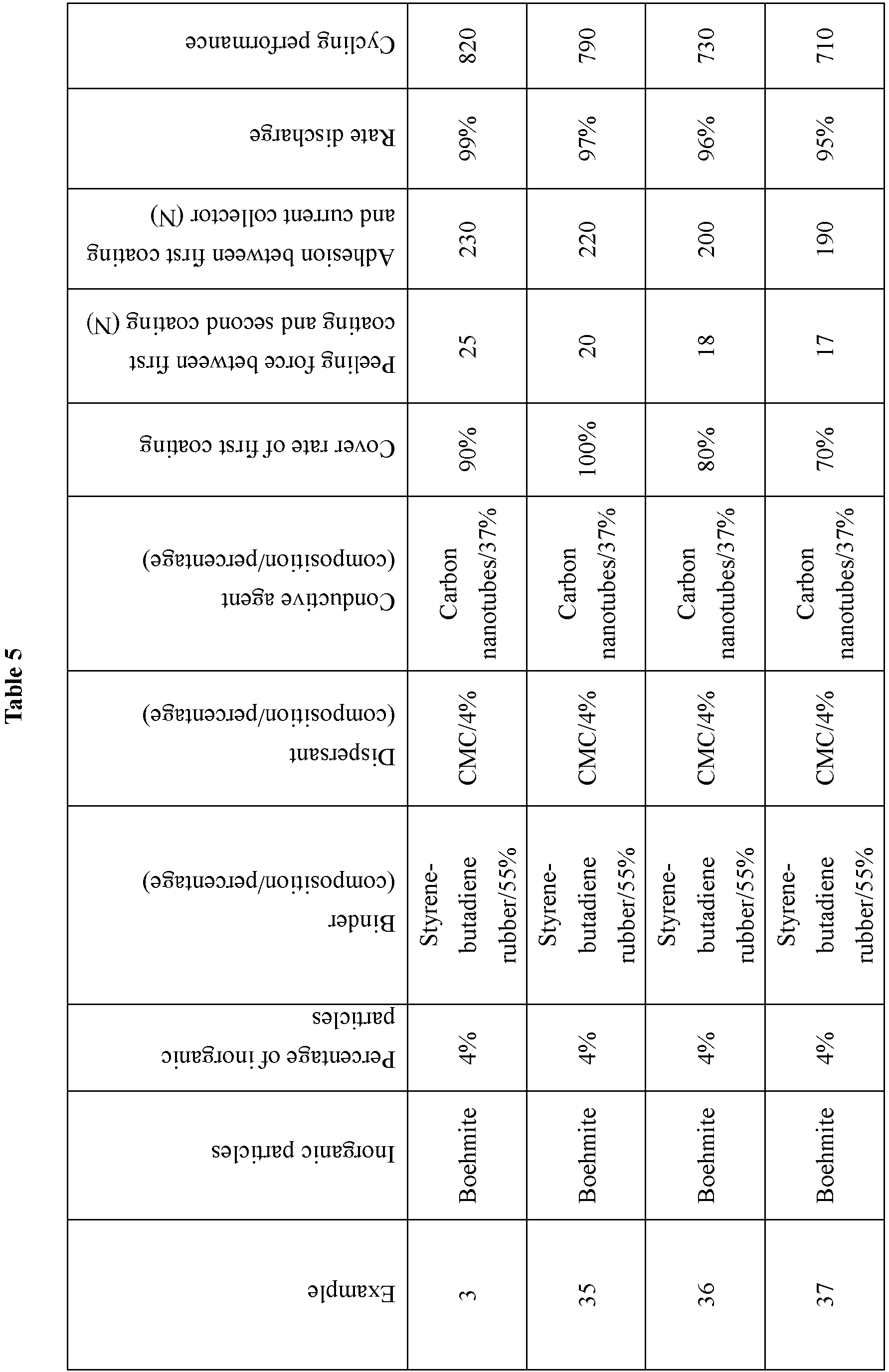

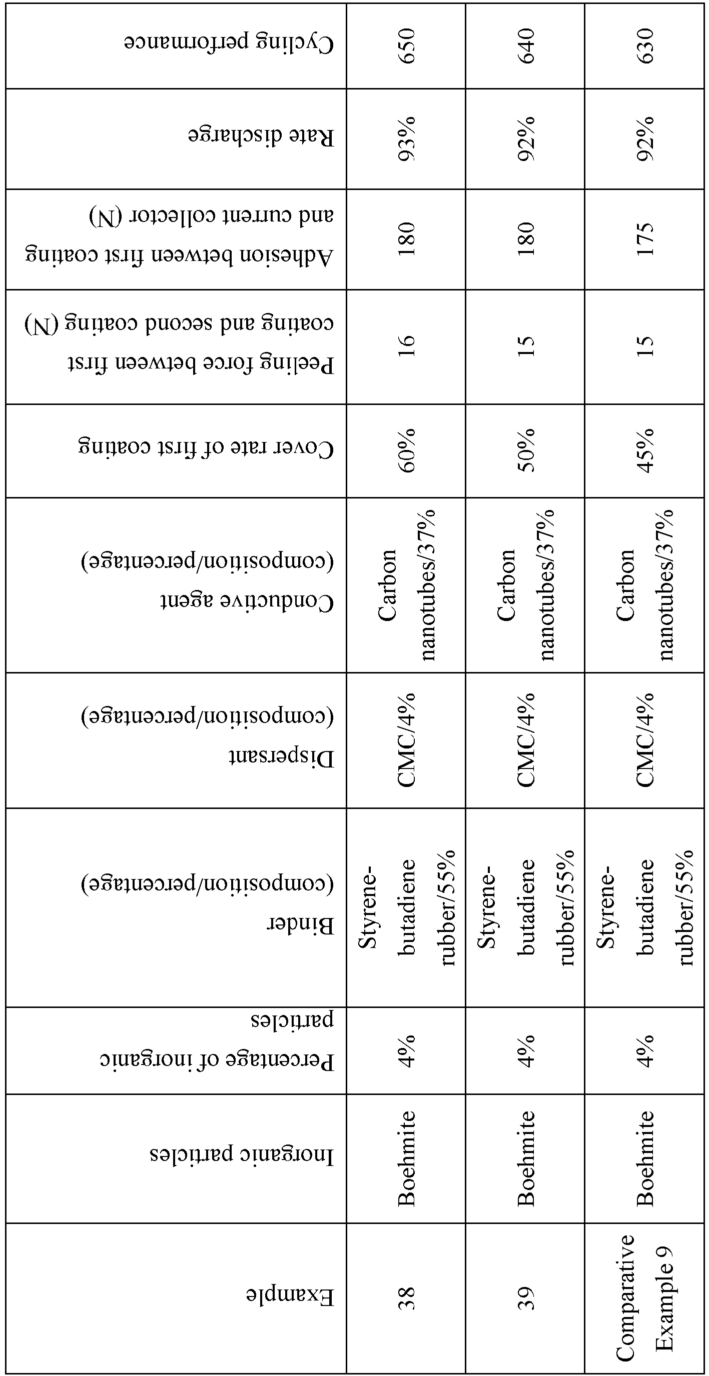

In the electrochemical apparatus in this application, the peeling force between the first coating and the second coating of the negative electrode plate is significantly enhanced to 15 N or higher. Due to the enhancement of the adhesion of the electrode plate, the rate performance and cycling performance of the battery are accordingly improved as well.

It can be seen from Examples 1 to 3 and Comparative Examples 1 and 2 that the addition of the inorganic particles into the first coating has a significant influence on enhancement of the peeling force of the electrode plate. The type of the inorganic particles also affects the viscosity of the electrode plate. The inventors have accidentally found in research that, with the Mohs hardness being 2.5 to 7.5, the inorganic particles have a more significant effect on enhancing the adhesion of the electrode plate. For example, when aluminum oxide (with a Mohs hardness of 9) is added, the peeling force between the first coating and the second coating is merely enhanced from 5 N to 7 N. However, when boehmite is used, the peeling force is enhanced to 25 N.

It can be seen from Examples 4 to 6 that when the mass percentage of the inorganic particles is 2% to 10%, the electrode plate has higher adhesion, and the peeling force between the first coating and the second coating can reach 20 N or higher. In some preferred embodiments of this application, the percentage of the inorganic particles is 2% to 5%.

It can be seen from Examples 7 to 11 that when the mass percentage of the binder is 30% to 60%, the percentage of the conductive agent is 60% to 30%, and the mass percentage of the dispersant is 2% to 5%, the peeling forces between the first coating and the second coating are all larger than 15 N and increase with the percentage of the binder. With the increase in the percentage of the binder, the percentage of the conductive agent decreases gradually. It can be seen from Example 11 that with the decrease in the percentage of the conductive agent, the rate discharge performance and cycling performance of the battery decrease even though the adhesion of the electrode plate is enhanced. Therefore, in some embodiments of this application, the mass percentage of the binder is 30% to 60%, and the percentage of the binder is 30% to 60%.

In addition, it can also be seen from Examples 7 to 11 all the different types of binders, dispersants, and conductive agents used in this application can provide relatively large peeling force between the first coating and the second coating.

It can be seen from Examples 12 to 17 and Comparative Examples 3 and 4 that the coating weight of the first coating affects the adhesion of the electrode plate. When the coating weight is 0.02 mg/cm² to 0.08 mg/cm², the peeling force between the first coating and the second coating increases with the coating weight; and when the coating weight is 0.08 mg/cm² to 0.15 mg/cm², the peeling force between the first coating and the second coating decreases with the coating weight. Therefore, in some preferred embodiments of this application, the coating weight X of the first coating satisfies 0.02 mg/cm²≤X≤0.15 mg/cm².

It can be seen from Examples 18 to 26 and Comparative Examples 5 and 6 that when the Dᵥ50 particle size of the inorganic particles is less than or equal to 200 nm, the peeling force between the first coating and the second coating increases with the particle size; and that when the particle size is greater than 200 nm, the peeling force between the first coating and the second coating decreases with the particle size. Therefore, in some preferred embodiments of this application, the particle size of the inorganic particles is 50 nm to 1 µm.

It can be seen from Examples 27 to 34 and Comparative Examples 7 and 8 that when the thickness of the first coating is less than or equal to 380 nm, the peeling force between the first coating and the second coating increases with the thickness of the coating; and that when the thickness of the first coating is greater than 380 nm, the peeling force between the first coating and the second coating decreases with the thickness of the coating. Therefore, in some preferred embodiments of this application, the thickness of the first coating is 100 nm to 2 µm.

It can be seen from Example 3, Examples 35 to 39, and Comparative Example 9 that a higher cover rate of the first coating means larger adhesion of the electrode plate. In some embodiments of this application, the cover rate of the first coating on the surface of the current collector is 50% to 100%.

It should be noted that the adhesion of the electrode plate includes the peeling force between the first coating and the current collector, as well as the peeling force between the first coating and the second coating. The peeling force between the first coating and the current collector is far larger than the peeling force between the first coating and the second coating. Therefore, the adhesion of the electrode plate is mainly reflected by the peeling force between the first coating and the second coating in this application.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. An electrochemical apparatus, comprising a negative electrode; wherein the negative electrode comprises a current collector, a first coating, and a second coating; the second coating is provided on at least one surface of the current collector; the first coating is provided between the current collector and the second coating; the first coating comprises inorganic particles; and a peeling force F between the first coating and the second coating satisfies 15 N≤F≤30 N.

2. The electrochemical apparatus according to claim 1, wherein a Dᵥ50 particle size of the inorganic particles satisfies 50 nm≤Dᵥ50≤1 µm.

3. The electrochemical apparatus according to claim 1, wherein Mohs hardness of the inorganic particles is 2.5 to 7.5.

4. The electrochemical apparatus according to any one of claims 1 to 3, wherein the inorganic particles comprise at least one of boehmite, aluminum powder, quartz sand, apatite, nanoceramics, or zircon.

5. The electrochemical apparatus according to claim 1, wherein the first coating further comprises a conductive agent, a binder, and a dispersant; and based on a total mass of the first coating, a mass ratio of the inorganic particles, the binder, the conductive agent, and the dispersant is (2%-10%):(30%-60%):(30%-60%):(2%-5%).

6. The electrochemical apparatus according to claim 5, wherein the binder comprises at least one of styrene-butadiene rubber, polyacrylic acid, polyvinyl alcohol, polyethylene glycol, polyacrylic ester, polyacrylonitrile, polyvinylidene fluoride, polyvinyl chloride, formaldehyde resin, cyclodextrin, or cyanoacrylate.

7. The electrochemical apparatus according to claim 5, wherein the dispersant comprises at least one of sodium hydroxymethyl cellulose, lithium hydroxymethyl cellulose, sodium alginate, propylene glycol alginate, methyl cellulose, starch sodium phosphate, sodium carboxymethyl cellulose, sodium alginate protein, casein, sodium polyacrylate, polyoxyethylene, or polyvinylpyrrolidone.

8. The electrochemical apparatus according to claim 5, wherein the conductive agent comprises at least one of a zero-dimensional conductive agent or a one-dimensional conductive agent.

9. The electrochemical apparatus according to claim 8, wherein at least one of the following characteristics is satisfied:
the zero-dimensional conductive agent comprising at least one of conductive carbon black, acetylene black, or Ketjen black, and Dᵥ50 of the zero-dimensional conductive agent being 50 nm to 1 µm; or
the one-dimensional conductive agent comprising at least one of a conductive carbon tube or a conductive carbon rod, and an average diameter of the one-dimensional conductive agent being 50 nm to 1 µm.

10. The electrochemical apparatus according to claim 1, wherein a thickness L of the first coating satisfies 100 nm≤L≤2 µm.

11. The electrochemical apparatus according to claim 1, wherein a coating weight X of the first coating satisfies 0.02 mg/cm² ≤X≤ 0.15 mg/cm².

12. The electrochemical apparatus according to claim 1, wherein a cover rate of the first coating is 50% to 100%.

13. The electrochemical apparatus according to claim 1, wherein a peeling force between the first coating and the current collector is 10 N/m to 300 N/m.

14. The electrochemical apparatus according to claim 1, wherein a resistance of the negative electrode is 1 mQ to 100 mΩ.

15. An electronic apparatus, comprising the electrochemical apparatus according to any one of claims 1 to 14.
